# EUROPEAN PATENT APPLICATION

(11) **EP 4 144 420 A1**
(43) Date of publication of application: **08.03.2023**
(21) Application number: 22164705.0
(22) Date of filing: 28.03.2022
(51) Int. Cl.: A63B 21/005

(54) **METHOD AND DEVICE FOR CONTROLLING MAGNETIC RESISTANCE OF EXERCISE BIKE AND EXERCISE BIKE**

(30) Priority: 01.09.2021 CN 202111018224
(71) Applicant: Fitplay Technology (HK) Limited, Hong Kong (HK)
(72) Inventor: HE, Guotai, HONG KONG (HK); LIU, Guanting, HONG-KONG (HK); CAI, Shenghong, HONG-KONG (HK); HU, Weisheng, HONG-KONG (HK)
(74) Representative: Loyer & Abello

(57) **Abstract**

The application relates to the technical field of fitness equipment, in particular to a method and device for controlling the magnetic resistance of an exercise bike, and an exercise bike. The method for controlling magnetic resistance of an exercise bike includes: monitoring in real time a working state of an electromagnet, and judging by a control module whether a resistance provided by a magnetron wheel conforms to a currently set resistance, according to a monitoring result of the working state of the electromagnet and a relationship between the working state of the electromagnet and the resistance provided by the magnetron wheel; and the control module adjusting a working current of the electromagnet if the resistance provided by the magnetron wheel does not conform to the currently set resistance, to adjust a magnetic field strength of the electromagnet, so that the resistance provided by the magnetron wheel conforms to the currently set resistance.

## Description

### Technical Field

The application relates to the technical field of fitness equipment, and in particular, to a method and device for controlling the magnetic resistance of an exercise bike, and an exercise bike.

### Background Art

An exercise bike, also called as cardio-pulmonary training equipment, is typical aerobic fitness equipment that simulates outdoor sports. It promotes cardiovascular exercise, accelerates metabolism, and enhances heart and lung function mainly through the long-term, moderate-intensity exercise of body, so as to improve the body's physique.

A magnetically controlled exercise bike uses the magnetic control to generate the resistance, thereby enhancing the training effect of the exercise bike. At present, most of the magnetically controlled exercise bikes are realized by means of magnetron wheels, and the magnetron wheels provide resistance for the exercise bikes through magnetic force and electromagnetic induction. The magnetron wheel generally controls the working current of the electromagnet, by using PWM (pulse width modulation) to adjust the voltage. Because the coil on the electromagnet has impedance, the coil will heat up when the electromagnet is working, causing the coil impedance to increase, such that when adjusted to a fixed resistance gear, the resistance will drift. When drifting, the coil heats up, the magnetic field strength of the electromagnet decreases, and the resistance provided by the magnetron wheel is reduced. For example, by adjusting the gear, the user needs the magnetron wheel to provide a resistance of 100 N, but if the temperature of the electromagnet is too high, it is very likely that the resistance provided by the magnetron wheel is only 80 N, which will seriously affect the training effect.

Therefore, if the user does exercises for a period of time in a certain fixed gear, with the time period increases, the temperature of the electromagnet rises, resulting in that the resistance actually provided by the magnetron wheel does not conform to the theoretical resistance range of this gear (the resistance required by the user). The gear adjustment accuracy is poor, which affects the use effect and use experience of users.

### Summary

The purpose of the present application is to provide a method and device for controlling magnetic resistance of an exercise bike, and an exercise bike, so as to solve, to a certain extent, the technical problems, existing in the prior art, of poor gear adjustment accuracy, which affects the use effect and use experience of users.

The application provides a method for controlling a magnetic resistance of an exercise bike, including: monitoring in real time a working state of an electromagnet, and judging by a control module whether a resistance provided by a magnetron wheel conforms to a currently set resistance, according to a monitoring result of the working state of the electromagnet and a relationship between the working state of the electromagnet and the resistance provided by the magnetron wheel; and the control module adjusting, if the resistance provided by the magnetron wheel does not conform to the currently set resistance, a working current of the electromagnet, to adjust a magnetic field strength of the electromagnet, so that the resistance provided by the magnetron wheel conforms to the currently set resistance.

When the user is using the exercise bike, the user selects one fixed gear (a certain set resistance) for exercise. While the electromagnet is working, the working state of the electromagnet is monitored at all times, and the control module analyzes the working state at all times of the electromagnet and obtains the resistance provided by the magnetron wheel, corresponding to the working state of the electromagnet at the same time, according to the relationship between the working state of the electromagnet and the resistance provided by the magnetron wheel; the control module compares the obtained resistance with the set resistance (the resistance corresponding to the selected fixed gear, allowing a certain error range), wherein if the two do not conform to each other, the control module adjusts the working current of the electromagnet to adjust the electromagnetic field intensity of the electromagnet, so that the resistance provided by the magnetron wheel can conform to the set resistance, so as to adjust the actual resistance provided by the magnetron wheel, which improves the accuracy of gear adjustment, guarantees the user's use effect, and improves the user experience.

As an optional technical solution, the step of monitoring in real time a working state of an electromagnet and judging by a control module whether a resistance provided by a magnetron wheel conforms to a currently set resistance according to a monitoring result of the working state of the electromagnet and a relationship between the working state of the electromagnet and the resistance provided by the magnetron wheel specifically includes:
monitoring in real time a temperature of a coil of the electromagnet, and judging by the control module whether the resistance provided by the magnetron wheel conforms to the currently set resistance according to the temperature of the coil and a relationship between the temperature of the coil and the resistance provided by the magnetron wheel.

Further, the control module cuts off a power supply circuit of the electromagnet if the temperature of the coil reaches an upper limit temperature value.

As an optional technical solution, the step of monitoring a working state of an electromagnet and judging by a control module whether a resistance provided by a magnetron wheel conforms to a currently set resistance according to a monitoring result of the working state of the electromagnet and a relationship between the working state of the electromagnet and the resistance provided by the magnetron wheel specifically includes:
monitoring a magnetic field strength of the electromagnet, and judging by the control module whether the resistance provided by the magnetron wheel conforms to the currently set resistance according to the magnetic field strength of the electromagnet and a relationship between the magnetic field strength and the resistance provided by the magnetron wheel.

Further, the control module includes a control unit and a gear control unit.

The method for controlling magnetic resistance of an exercise bike further includes:
monitoring a working state of the control unit; and
the gear control unit cutting off a power supply circuit of the electromagnet, if the control unit fails.

The present application provides a device for controlling magnetic resistance of an exercise bike, applicable to the method for controlling magnetic resistance of an exercise bike mentioned above, including a control module and a monitoring module communicating with the control module, wherein the monitoring module is configured to monitor a working state of the electromagnet and transmit it to the control module; the control module can store a relationship between the working state of the electromagnet and the resistance provided by the magnetron wheel, analyze and calculate data transmitted by the monitoring module, and adjust a working current of the electromagnet.

As an optional technical solution, the monitoring module includes a temperature sensor communicating with the control module, and the temperature sensor is configured to monitor the temperature of a coil of the electromagnet, and the control module can store a relationship between the temperature of the coil and a resistance provided by the magnetron wheel.

As an optional technical solution, the monitoring module is a magnetic field strength monitoring element, and the magnetic field strength monitoring element is configured to monitor a magnetic field strength of the electromagnet, and the control module can store a relationship between the magnetic field strength and a resistance provided by the magnetron wheel.

Further, the control module includes a control unit, a gear control unit and a timer that communicate with the control unit; and the timer is in communication with the gear control unit, and the control unit periodically sends a count reset instruction to the timer, wherein when the timer does not receive the count reset instruction within a set time period, the gear control unit cuts off a power supply circuit of the electromagnet.

The present application provides an exercise bike, including a vehicle body, a magnetron wheel, and the device for controlling magnetic resistance of an exercise bike mentioned above, wherein the magnetron wheel includes a base, a flywheel, and an electromagnet, the flywheel is rotatably connected to the base, the electromagnet is arranged on the base; the base is fixedly connected to the vehicle body; and the control module is arranged on the vehicle body, and the monitoring module is arranged on the magnetron wheel.

It should be understood that the foregoing general description and the following specific embodiments are both made for the purpose of illustration and description and do not necessarily limit the present disclosure. The drawings, incorporated into the specification and constituting a part of the specification, illustrate the subject matter of the present disclosure. At the same time, the description and drawings are used to explain the principles of the present disclosure.

### Brief Description of Drawings

In order to more clearly describe the specific embodiments of the present application or the technical solutions in the prior art, the drawings that need to be used in the specific embodiments or the description of the prior art are briefly introduced as follows. Obviously, the drawings in the following description show some embodiments of the present application. For those skilled in the art, other drawings can be obtained based on these drawings without creative work.
Fig. 1 is a principle diagram of a method for controlling magnetic resistance of an exercise bike according to an embodiment of the present application; and
Fig. 2 is a working principle diagram of a timer in the device for controlling the magnetic resistance of an exercise bike according to an embodiment of the present application.

### Detailed Description of Embodiments

The technical solutions of the present application will be clearly and completely described below in conjunction with the drawings. Obviously, the described embodiments are part of the embodiments of the present application, rather than all of the embodiments.

Generally, the components of the embodiments of the present application described and shown in the drawings herein may be arranged and designed in a variety of different configurations. Therefore, the following detailed description of the embodiments of the present application provided in the drawings is not intended to limit the scope of the claimed application, but merely represents selected embodiments of the present application.

All other embodiments obtained by those skilled in the art based on the embodiments of the present application, without creative work, shall fall within the protection scope of the present application.

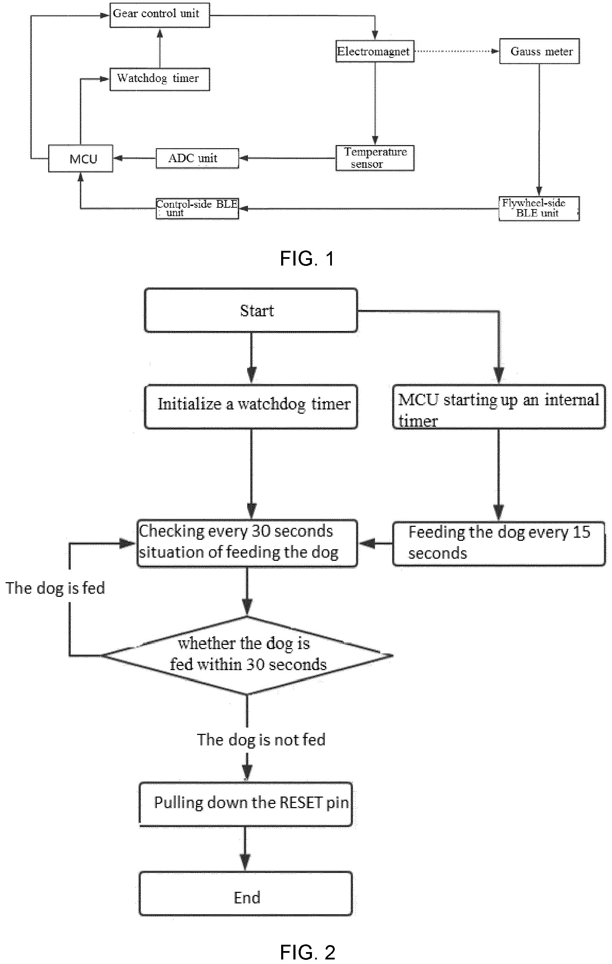

As shown in FIG. 1, the present application provides a method for controlling the magnetic resistance of an exercise bike, including: monitoring in real time the working state of the electromagnet, and judging by the control module whether the resistance provided by the magnetron wheel conforms to the currently set resistance according to the monitoring result of the working state of the electromagnet and the relationship between the working state of the electromagnet and the resistance provided by the magnetron wheel (the relationship between the two can be obtained in advance through simulation calculation and stored in the control module); and the control module adjusting, if the resistance provided by the magnetron wheel does not conform to the currently set resistance, a working current of the electromagnet, to adjust a magnetic field strength of the electromagnet, so that the resistance provided by the magnetron wheel conforms to the currently set resistance.

During the user is using the exercise bike, the user selects one fixed gear (a certain set resistance) for exercise. While the electromagnet is working, the working state of the electromagnet is monitored at all times, that is, the working state of the electromagnet is monitored at any times. The control module analyzes the working state at all times of the electromagnet and obtains the resistance provided by the magnetron wheel, corresponding to the working state of the electromagnet at the same time, according to the relationship between the working state of the electromagnet and the resistance provided by the magnetron wheel; the control module compares the obtained resistance with the set resistance (the resistance corresponding to the selected fixed gear, allowing a certain error range), wherein if the two do not conform to each other, the control module adjusts the working current of the electromagnet to adjust the electromagnetic field intensity of the electromagnet, so that the resistance provided by the magnetron wheel can conform to the set resistance, so as to adjust the actual resistance provided by the magnetron wheel, which improves the accuracy of gear adjustment, guarantees the user's use effect, and improves the use experience of the user.

It should be noted that the control module can also calculate the difference between the current resistance and the set resistance, and then obtain, through conversion, the amount of current that needs to be adjusted, so as to adjust the working current of the electromagnet.

Herein, if the current resistance obtained by the control module is higher than the set resistance, the control module can perform control to reduce the working current of the electromagnet, thereby reducing the magnetic field strength of the electromagnet, and thereby reducing the resistance actually provided by the magnetron wheel.

If the current resistance obtained by the control module is lower than the set resistance, the control unit can perform control to increase the working current of the electromagnet, thereby increasing the magnetic field strength of the electromagnet, and thereby increasing the resistance actually provided by the magnetron wheel.

The present application also provides a device implementing the method for controlling the magnetic resistance of the exercise bike provided by the embodiment of the present application. The device for controlling the magnetic resistance of the exercise bike includes a control module and a monitoring module communicating with the control module, wherein the monitoring module is configured to monitor a working state of the electromagnet and transmit it to the control module; the control module can store a relationship between the working state of the electromagnet and the resistance provided by the magnetron wheel, analyze and calculate data transmitted by the monitoring module, and adjust a working current of the electromagnet.

Specifically, the monitoring module transmits the monitored parameter data of the working state of the electromagnet to the control module, and the control module performs reception, analyses, and calculation, etc. on the data and obtain the resistance corresponding to the working state according to the relationship between the working state of the electromagnet and the resistance provided by the magnetron wheel.

As an optional technical solution, the step of monitoring in real time a working state of an electromagnet and judging by a control module whether a resistance provided by a magnetron wheel conforms to a currently set resistance according to a monitoring result of the working state of the electromagnet and a relationship between the working state of the electromagnet and the resistance provided by the magnetron wheel may specifically include monitoring in real time the temperature of a coil of the electromagnet, and judging by the control module whether a resistance provided by a magnetron wheel conforms to a currently set resistance according to the temperature of the coil and a relationship between the temperature of the coil and the resistance provided by the magnetron wheel, that is, the corresponding resistance of the magnetron wheel is obtained according to the temperature of the coil.

Correspondingly, the monitoring module in the device for controlling the magnetic resistance of the exercise bike includes a temperature sensor communicating with the control module, and the temperature sensor is configured to monitor temperature of a coil of the electromagnet, and the control module can store a relationship between the temperature of the coil and a resistance provided by the magnetron wheel. Specifically, the control module may include a control unit (that is, MCU) and an ADC unit (A/D converter) communicating with the control unit, the temperature sensor communicates with the ADC unit, and the ADC unit converts the information collected by the temperature sensor, and transmits it to the control unit; and the control unit is in communication with the electromagnet, so as to be able to control the operation of the electromagnet.

As for the electromagnet, the higher the coil temperature is, the greater the resistance is and the smaller the current is. The resistance corresponds to the resistance provided by the magnetron wheel. The resistance curve of heating of the coil can be measured in advance. According to the temperature value which the temperature sensor feeds back to the ADC unit, the MCU unit can obtain the corresponding resistance value by looking up a table, thereby obtaining the corresponding resistance provided by the magnetron wheel. According to the difference between the current resistance and the set resistance, the resistance difference value, that is the adjustment amount of the resistance, is obtained, so as to obtain by conversion the adjustment amount of the current. It can be controlled by PWM (Pulse Width Modulation) control technology---pulse width modulation technology, and the resistance adjustment amount can be regarded as the PWM duty cycle.

On the basis of the foregoing embodiments, further, if the coil temperature reaches the upper limit temperature value, the control module cuts off the power supply circuit of the electromagnet, thereby avoiding the safety problems caused by the excessively high coil temperature of the electromagnet, so that the exercise bike is safer to use indoors.

Specifically, the control unit communicates with the electromagnet, and the control unit obtains the feedback on the coil temperature from the ADC unit. If the coil temperature obtained by the control unit is higher than the upper limit temperature value, the control unit performs control to cut off the power supply circuit of the electromagnet, so that the electromagnet stops working for avoiding occurrence of danger.

As an optional solution, the step of monitoring a working state of an electromagnet and judging by a control module whether a resistance provided by a magnetron wheel conforms to a currently set resistance according to a monitoring result of the working state and a relationship between the working state of the electromagnet and the resistance provided by the magnetron wheel specifically includes: monitoring a magnetic field strength of the electromagnet, and judging by the control module whether a resistance provided by a magnetron wheel conforms to a currently set resistance, according to the magnetic field strength and a relationship between the magnetic field strength and the resistance provided by the magnetron wheel.

In this embodiment, the relationship between the magnetic field strength and the resistance provided by the magnetron wheel (this relationship can be obtained through performing simulation or calculation, or the like) is stored in the control module (specifically in the control unit). The control module obtains, based on the adjustment amount of the resistance, the adjustment amount of the magnetic field strength, and then obtains the adjustment amount of the current by conversion. PWM (Pulse Width Modulation) control technology-pulse width modulation technology can be used for control, and the PWM ratio can be increased or decreased according to a preset step length, until the magnetic field strength can make the resistance provided by the magnetron wheel conform to the set resistance of the gear.

Correspondingly, the monitoring module in the device for controlling the magnetic resistance of the exercise bike is a magnetic field strength monitoring element, and the magnetic field strength monitoring element is configured to monitor a magnetic field strength of the electromagnet, and the control module can store a relationship between the magnetic field strength and a resistance provided by the magnetron wheel, wherein the magnetic field monitoring element may be a Gauss meter, a magnetic field strength sensor, a magnetic field strength monitor or the like. Specifically, the control module also includes a control-side BLE unit (Bluetooth), and a flywheel-side BLE unit. The magnetic field monitoring element is in communication with the flywheel-side BLE unit, the flywheel-side BLE unit is in communication with the control-side BLE unit, and the control-side BLE unit is in communication with the control unit.

It should be noted that it is possible that only the temperature of the electromagnet is monitored, and correspondingly, the monitoring module only includes a temperature sensor, or it is possible that only the magnetic field strength of the electromagnet is monitored, and correspondingly, the monitoring module only includes a magnetic field strength monitoring element. Optionally, the coil temperature and the magnetic field strength of the electromagnet are monitored at the same time, that is, the monitoring module includes both a temperature sensor and a magnetic field strength monitoring element, so that the working state of the electromagnet can be monitored in two aspects, thus making the monitoring on the working state of the electromagnet more accurate, which makes the gear adjustment more accurate.

On the basis of any of the above embodiments, further, the control module includes a control unit and a gear control unit. The method for controlling magnetic resistance of the exercise bike further includes monitoring the working state of the control unit, wherein if the control unit fails, the gear control unit cuts off the power supply circuit of the electromagnet. Therefore, it is possible to avoid the coil of the electromagnet from being out of control when the control unit is out of control or fails, which avoids the risk of safety accidents caused by the situation that the current of the coil of electromagnet increases to cause the electromagnet coil to heat due to working for a long time at the large current, which further improves the safety of the exercise bike.

Correspondingly, the device for controlling the magnetic resistance of the exercise bike further includes the control module, which includes a control unit as well as a gear control unit and a timer that communicate with the control unit. The timer communicates with the gear control unit. The control unit periodically sends a count reset instruction to the timer, wherein when the timer does not receive the count reset instruction within a set time period, the gear control unit cuts off the power supply circuit of the electromagnet (the gear control unit can cut off the power supply circuit of the electromagnet, but is not limited thereto).

Specifically, the gear control unit may include a voltage control circuit composed of a mos tube (metal-oxide-semiconductor field effect transistor) and a triode. The voltage level is controlled by PWM control technology. When the PWM duty cycle is 0, that is, the electrical level is low, the output voltage of the voltage control circuit is 0, thereby cutting off the power supply circuit of the electromagnet; and when the MCU is working normally, the MCU will periodically generate one pulse data to clear the count of the timer. The RESET pin (reset lever) of the timer connected to the above voltage control circuit maintains the external pull-up high level state (pull-up level state, high level state), which is controlled by the MCU. When the MCU fails or the control of the MCU fails, the timer does not receive within the specified time period the count reset instruction, the timer will pull the RESET pin low, so that the voltage control circuit is at a low electrical level, and then the power supply circuit of the electromagnet is cut off.

Herein, a watchdog timer may be used as the timer. The principle of the protection process is illustrated with an example in which the MCU sends one count reset instruction to the watchdog timer every 15 seconds (which can be called as feeding a dog), and the watchdog timer checks whether it receives a count reset instruction every 30 seconds.

As shown in FIG. 2, in the initial state, the RESET pin of the watchdog timer is in a pull-up high level state, and the MCU sends one count reset instruction every 15 seconds (that is, feeding the dog every 15 seconds), and the watchdog timer checks every 30 seconds whether it receives a count reset instruction (that is, it checks every 30 seconds the situation of feeding the dog to judge whether the dog is fed within 30 seconds). If the watchdog timer receives a count reset instruction in 30 seconds (that is, the dog is fed), the RESET pin of the watchdog timer is still in a pull-up high level state, indicating that the MCU is working normally. If the watchdog timer does not receive a count reset instruction in 30 seconds (that is, the dog is not fed), the RESET pin of the watchdog timer is pulled down. It is changed from the state of being pulled high to the state of being pulled low, indicating that the MCU is abnormal, and the gear control unit cuts off the power supply circuit of the electromagnet, thereby preventing the coil of the electromagnet from generating heat.

The present application also provides an exercise bike, including a vehicle body, a magnetron wheel, and the device for controlling magnetic resistance of an exercise bike in any of the above technical solutions. The magnetron wheel comprises a base, a flywheel and an electromagnet. The flywheel is rotatably connected onto the base, and the electromagnet is arranged on the base. The base is fixedly connected to the vehicle body. The control module is arranged on the vehicle body, and the monitoring module is arranged on the magnetron wheel. The exercise bike provided in this embodiment can monitor the working state of the electromagnet while the user is using it. The control module can adjust the resistance provided by the magnetron wheel according to the monitored working state of the electromagnet, to make it conform to the currently set resistance, realizing the precise adjustment of the gear.

Finally, it should be noted that the above embodiments are only used to illustrate the technical solutions of the present application, but not to limit it. Although the present application has been described in detail with reference to the foregoing embodiments, those skilled in the art should understand that the technical solutions recorded in the foregoing embodiments can still be modified, or some or all of the technical features thereof can be equivalently replaced. These modifications or replacements do not make the essence of the corresponding technical solutions deviate from the scope of the technical solutions of the embodiments of the present application. In the specification provided here, many specific details are explained. However, it can be understood that the embodiments of the present application can be performed without these specific details. In some instances, well-known methods, structures, and technologies are not shown in detail, so as not to obscure this specification when understanding it. In addition, those skilled in the art can understand that although some embodiments described herein include certain features included in other embodiments but not include other features, it means that the combination of features of different embodiments are within the scope of the present application, and the combination forms the different embodiment.

## Claims

1. A method for controlling magnetic resistance of an exercise bike, comprising steps of:
monitoring in real time a working state of an electromagnet, and judging by a control module whether a resistance provided by a magnetron wheel conforms to a currently set resistance, according to a monitoring result of the working state of the electromagnet and a relationship between the working state of the electromagnet and the resistance provided by the magnetron wheel; and
the control module adjusting a working current of the electromagnet if the resistance provided by the magnetron wheel does not conform to the currently set resistance, to adjust a magnetic field strength of the electromagnet, so that the resistance provided by the magnetron wheel conforms to the currently set resistance.

2. The method for controlling magnetic resistance of an exercise bike according to claim 1, wherein the step of monitoring in real time a working state of an electromagnet and judging by a control module whether a resistance provided by a magnetron wheel conforms to a currently set resistance according to a monitoring result of the working state of the electromagnet and a relationship between the working state of the electromagnet and the resistance provided by the magnetron wheel comprises:
monitoring in real time a temperature of a coil of the electromagnet, and judging by the control module whether the resistance provided by the magnetron wheel conforms to the currently set resistance, according to the temperature of the coil and a relationship between the temperature of the coil and the resistance provided by the magnetron wheel.

3. The method for controlling magnetic resistance of an exercise bike according to claim 2, further comprising:
the control module cutting off a power supply circuit of the electromagnet if the temperature of the coil reaches an upper limit temperature value.

4. The method for controlling magnetic resistance of an exercise bike according to claim 1 or 2, wherein the step of monitoring a working state of an electromagnet and judging by a control module whether a resistance provided by a magnetron wheel conforms to a currently set resistance according to a monitoring result of the working state of the electromagnet and a relationship between the working state of the electromagnet and the resistance provided by the magnetron wheel comprises:
monitoring a magnetic field strength of the electromagnet, and judging by the control module whether the resistance provided by the magnetron wheel conforms to the currently set resistance, according to the magnetic field strength and a relationship between the magnetic field strength and the resistance provided by the magnetron wheel.

5. The method for controlling magnetic resistance of an exercise bike according to claim 1, wherein the control module comprises a control unit and a gear control unit; and
the method for controlling magnetic resistance of an exercise bike further comprises:
monitoring a working state of the control unit; and
the gear control unit cutting off a power supply circuit of the electromagnet, if the control unit fails.

6. A device for controlling magnetic resistance of an exercise bike, applicable to the method for controlling magnetic resistance of an exercise bike according to any one of claims 1-5, comprising a control module and a monitoring module communicating with the control module, wherein the monitoring module is configured to monitor a working state of the electromagnet and transmit it to the control module; the control module is configured to store a relationship between the working state of the electromagnet and the resistance provided by the magnetron wheel, analyze and calculate data transmitted by the monitoring module, and adjust a working current of the electromagnet.

7. The device for controlling magnetic resistance of an exercise bike according to claim 6, wherein the monitoring module comprises a temperature sensor communicating with the control module, and the temperature sensor is configured to monitor a temperature of a coil of the electromagnet, and the control module is configured to store a relationship between the temperature of the coil and a resistance provided by the magnetron wheel.

8. The device for controlling magnetic resistance of an exercise bike according to claim 6 or 7, wherein the monitoring module comprises a magnetic field strength monitoring element, and the magnetic field strength monitoring element is configured to monitor a magnetic field strength of the electromagnet, and the control module is configured to store a relationship between the magnetic field strength and a resistance provided by the magnetron wheel.

9. The device for controlling magnetic resistance of an exercise bike according to claim 6, wherein the control module comprises a control unit, and a gear control unit and a timer that communicate with the control unit; and the timer is in communication with the gear control unit, and the control unit is configured to periodically send a count reset instruction to the timer, wherein when the timer does not receive the count reset instruction within a set time period, the gear control unit cuts off a power supply circuit of the electromagnet.

10. An exercise bike, comprising a vehicle body, a magnetron wheel, and the device for controlling magnetic resistance of an exercise bike according to any one of claims 6-9, wherein the magnetron wheel comprises a base, a flywheel, and an electromagnet, the flywheel is rotatably connected to the base, the electromagnet is arranged on the base; the base is fixedly connected to the vehicle body; the control module is arranged on the vehicle body; and the monitoring module is arranged on the magnetron wheel.
